# DEMANDE DE BREVET EUROPEEN

(11) **EP 1 956 599 A1**
(43) Date de publication de la demande: **13.08.2008**
(21) Numéro de dépôt: 08354009.6
(22) Date de dépôt: 25.01.2008
(51) Int. Cl.: G11B 7/26

(54) **Formation de zones en creux profondes et son utilisation lors de la fabrication d'un support d'enregistrement optique**

(30) Priorité: 08.02.2007 FR 0700901
(71) Demandeur: Commissariat à l'Energie Atomique, 75015 Paris (FR)
(72) Inventeur: Martinez, Christophe, 38100 Grenoble (FR); Fargeix, Alain, 38240 Meylan (FR)
(74) Mandataire: Jouvray, Marie-Andrée

(57) **Abrégé**

Une zone en creux (1) est formée à partir d'un empilement (2) comportant au moins une première couche (3) constituée par un matériau apte à changer d'état physique et une seconde couche (4) constituée par le même matériau que celui constituant la première couche (3), mais dans un état physique différent. Une région de la première couche (3) est traitée pour faire passer ladite région de son état physique initial à l'état physique correspondant à celui de la seconde couche (4). Une étape de gravure sélective est, ensuite, réalisée pour éliminer ladite région de la première couche (4) ainsi que la région de la seconde couche (4) initialement recouverte par la région traitée de la première couche (3). Avantageusement, ledit matériau est un matériau à transition de phase.

## Description

### Domaine technique de l'invention

L'invention concerne un procédé de formation d'au moins une zone en creux comportant les étapes successives suivantes :
- traitement localisé d'au moins une région d'une première couche constituée par un matériau apte à changer d'état physique, pour faire passer ladite région d'un premier état physique à un second état physique,
- et gravure sélective de ladite région depuis une face libre de ladite première couche.

L'invention concerne également l'utilisation d'un tel procédé lors de la fabrication d'un support d'enregistrement optique.

### État de la technique

Les supports ou disques d'enregistrement optique comportent généralement au moins un substrat en polycarbonate comportant des zones en relief et en creux, également connues sous les noms anglo-saxons de « lands » et de « pits », et correspondant à des données d'information. Ainsi, les substrats comportent une face libre structurée selon un motif prédéterminé.

De tels substrats sont généralement fabriqués en grande quantité, par moulage par injection, à l'aide d'un moule ou d'un support matrice, également connu sous le nom anglo-saxon de « master disk » ou de « stamper ». Une des faces libres du support matrice est structurée sous une forme complémentaire au motif prédéterminé désiré pour les substrats. Le support matrice est obtenu à partir d'un modèle original. À titre d'exemple, la demande de brevet US-A-2005/0045587 décrit un procédé permettant de fabriquer le modèle original utilisé lors de la fabrication de disques optiques ainsi que le procédé de fabrication desdits disques optiques. Le modèle original est réalisé à partir d'un empilement comportant un substrat, par exemple en verre ou en silicium, et une couche en matériau sensible à la chaleur. Le matériau sensible à la chaleur est un oxyde d'antimoine, apte à changer d'état lors d'un échauffement provoqué par une exposition lumineuse de ladite couche. La face libre de la couche en matériau sensible à la chaleur est structurée, en exposant certaines zones de ladite face libre à un faisceau laser et en éliminant lesdites zones exposées. Une telle opération permet, ainsi, de réaliser des zones en relief et des zones en creux dans la couche en matériau sensible. Le modèle original obtenu est, ensuite, utilisé pour former un disque matrice métallique, destiné à servir de moule lors de la fabrication par moulage par injection des disques optiques.

Depuis l'apparition du mode de stockage des données sur des supports d'enregistrement optique, notamment sur des supports de type disque compact (CD ou « Compact Disc »), les dimensions des motifs à inscrire ont été réduites à plusieurs reprises. Or, pour une des dernières générations de supports d'enregistrement optique comprenant les supports optiques utilisant un laser bleu, plus connu sous le nom de disques « Blu-Ray », les développements récents tendent vers la formation de zones en creux dans le substrat plus profondes que pour les supports habituels. La profondeur envisagée pour les zones en creux des disques « Blu-Ray » est d'environ 80nm pour les mémoires à lecture seule (également appelées ROM ou « Read Only Memory ») alors que, pour les disques enregistrables une fois (ou disques de type R) et les disques réinscriptibles (ou disques RW), elle est d'environ 40nm. Les méthodes classiques pour fabriquer les modèles pour supports d'enregistrement optique, telles que celle décrite, par exemple, dans la demande de brevet US-A-2005/0045587, ne permettent pas d'obtenir des zones en relief présentant un tel niveau de profondeur. Le changement de phase provoqué par échauffement est effectivement limité au niveau de la surface de la couche en matériau sensible à la chaleur et ne permet pas une structuration profonde de ladite couche. L'épaisseur de la couche en matériau sensible à la chaleur est souvent calculée de manière à optimiser la réponse thermique du matériau. Or, comme les régions à insoler doivent généralement présenter une faible section, cette réponse est limitée en profondeur de pénétration. Une grande profondeur de pénétration thermique supposerait, en effet, un élargissement important de la largeur de la zone à insoler ainsi qu'un allongement de la durée d'insolation ce qui contribue également à un élargissement des zones insolées.

Dans la demande de brevet WO-A-2005/101398, il a été proposé d'augmenter la profondeur des zones en creux en disposant, entre la couche en matériau sensible à la chaleur et le substrat, une couche intermédiaire destinée à être structurée pour prolonger les zones en creux formées dans la couche en matériau sensible à la chaleur. La couche en matériau sensible à la chaleur est alors utilisée comme masque pour l'insolation. Ainsi, la structuration de la couche intermédiaire est réalisée à travers la couche en matériau sensible à la chaleur, elle-même structurée. Les régions libres du substrat, c'est-à-dire les régions du substrat coïncidant avec les zones en creux formées dans la couche en matériau sensible à la chaleur et dans la couche intermédiaire, peuvent aussi être gravées, afin d'augmenter encore la profondeur des zones en creux. Dans ce cas, la couche en matériau sensible à la chaleur forme un masque de gravure pour le substrat.

Un tel procédé permet d'obtenir des zones en creux plus profondes que les procédés classiques. Cependant, il présente au moins deux inconvénients majeurs. Tout d'abord, la couche intermédiaire, généralement en résine photosensible, doit subir un traitement thermique de durcissement à haute température, de manière à permettre le dépôt de la couche en matériau sensible à la chaleur. Or, un tel traitement thermique provoque une dégradation des propriétés de photosensibilité de la résine, ce qui peut être nuisible pour sa structuration ultérieure. De même, l'insolation de la couche en matériau sensible à la chaleur peut altérer les propriétés de la couche intermédiaire disposée sous ladite couche.

De manière plus générale, le problème lié à l'obtention de zones en creux profondes se pose dans d'autres domaines que celui des supports d'enregistrement optique. C'est notamment le cas dans le domaine de la lithographie.

Dans la demande de brevet US-2004/0209199, la couche en matériau sensible à la chaleur est formée d'un empilement de deux sous-couches superposées en matériaux distincts, par exemple en cuivre et en aluminium. Cependant, une fois structurée, elle est utilisée comme masque pour graver dans le substrat, des petites marques convexes et concaves. Le masque est, ensuite, retiré et le substrat ainsi gravé est utilisé comme modèle original. Une telle méthode ne permet pas donc pas d'obtenir des zones en creux suffisamment profondes pour être employée pour les dernières générations de supports d'enregistrement optique.

### Objet de l'invention

L'invention a pour but de former facilement et économiquement des zones en creux profondes en particulier lors de la fabrication de supports d'enregistrement optique, tout en remédiant aux inconvénients de l'art antérieur.

Selon l'invention, ce but est atteint par les revendications annexées.

Plus particulièrement, ce but est atteint par le fait que le procédé comporte, avant l'étape de traitement localisé, une étape de formation d'un empilement constitué par la première couche et une seconde couche constituée par ledit matériau dans son second état physique, l'étape de gravure sélective étant poursuivie jusqu'à élimination de la région de la seconde couche initialement recouverte par la région traitée de la première couche.

Plus particulièrement, le matériau est un matériau apte à passer d'un état thermodynamique métastable à un état thermodynamique stable, sous l'action de la chaleur et, en particulier, un matériau à transition de phase.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- les figures 1 à 4 représentent schématiquement, en coupe, différentes étapes d'un mode particulier de réalisation selon l'invention d'une zone en creux profonde dans un empilement.
- les figures 5 à 7 représentent schématiquement, en coupe, différentes étape d'un mode de réalisation dudit empilement.
- les figures 8 à 10 représentent schématiquement, en coupe, différentes étapes d'un autre mode de réalisation dudit empilement.
- les figures 11 et 12 représentent schématiquement, en coupe, des variantes de réalisation de l'empilement utilisé lors de la formation de zones en creux profondes.

### Description de modes particuliers de réalisation

Au moins une zone en creux est formée à partir d'un empilement constitué par :
- une première couche constituée par un matériau apte à changer d'état physique,
- une seconde couche constituée par le même matériau que celui constituant la première couche, mais dans un état physique différent de celui de la première couche et avantageusement plus sensible à la gravure que celui de la première couche.

Une région de la première couche est traitée, depuis la face libre de la première couche, pour faire passer ladite région de son état physique initial, c'est-à-dire celui de la totalité de la première couche, à un autre état physique correspondant à celui de la seconde couche.

Une étape de gravure sélective est, ensuite, réalisée, depuis la face libre de la première couche, pour éliminer ladite région préalablement traitée de la première couche. L'étape de gravure est poursuivie, à travers la première couche gravée, jusqu'à l'élimination complète de la région de la seconde couche initialement recouverte par la région traitée de la première couche. La première couche sert, alors, de couche barrière ou de masque à la gravure pour la seconde couche.

Les régions gravées respectivement des première et seconde couches forment alors une zone en creux dont la profondeur correspond à la somme des épaisseurs des première et seconde couches.

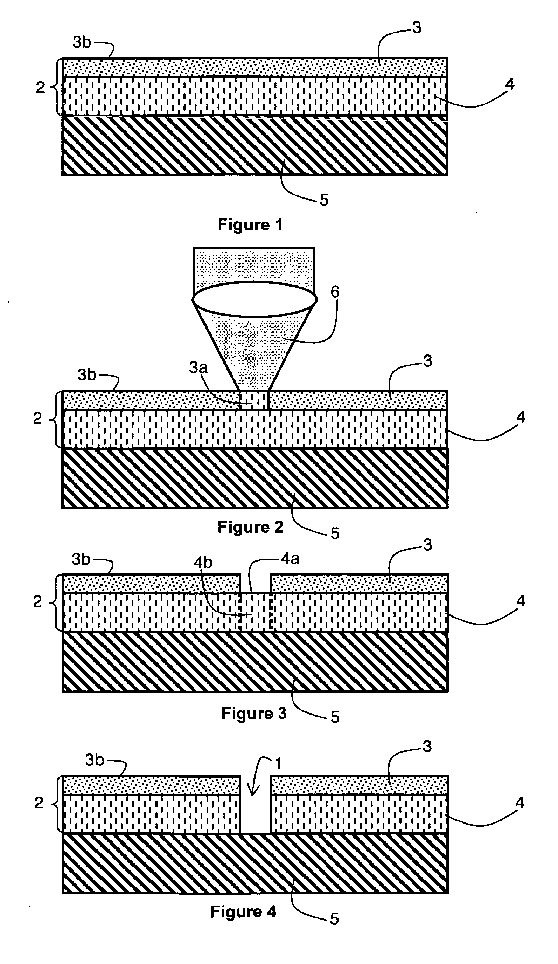

Les figures 1 à 4 illustrent, à titre d'exemple, un mode particulier de formation d'au moins une zone en creux 1 dans un empilement 2 constitué par :
- une première couche 3 constituée par un matériau présent dans un premier état physique, par exemple un état thermodynamique métastable, et apte à passer, avantageusement sous l'action de la chaleur, dans un second état physique, par exemple un état thermodynamique stable,
- et une seconde couche 4 constituée par ledit matériau dans son second état physique.

L'empilement 2 est dans le mode de réalisation représenté sur les figures 1 à 4 formé sur un substrat 5, par exemple en verre ou en silicium. Comme représenté sur la figure 1, la seconde couche 4 est disposée entre le substrat 5 et la première couche 3.

Le matériau constituant les première et seconde couches 3 et 4 est, avantageusement un matériau à transition de phase, par exemple un alliage d'au moins deux éléments choisis parmi le groupe comportant le germanium, l'antimoine, le tellure, l'indium, le sélénium, le bismuth, l'argent, le gallium, l'étain, le plomb et l'arsenic. À titre d'exemple, le matériau sera obtenu par pulvérisation d'une cible de Ge₂Sb₂Te₅.

Les matériaux à transition de phase présentent, en effet, l'avantage de pouvoir passer de la phase amorphe à une phase cristallisée sous l'action de la chaleur. Ce changement de phase est, par exemple, réalisé en provoquant l'échauffement dudit matériau par application, à la surface dudit matériau et de manière contrôlée, d'un rayonnement optique focalisé tel qu'un faisceau laser.

Ainsi, le matériau à transition de phase est avantageusement sous forme amorphe dans la première couche 3 et sous une forme cristallisée dans la seconde couche 4.

Sur la figure 2, une région 3a de la première couche 3 est exposée, de manière contrôlée, à un rayonnement optique focalisé 6 depuis la face libre 3b de ladite couche 3. Le rayonnement 6 provoque un échauffement et un changement de phase dans ladite région 3a. L'exposition de la région 3a au rayonnement optique focalisé 6, ainsi qu'un éventuel refroidissement de ladite région 3a ainsi chauffée, sont contrôlés de manière classique pour l'homme du métier, pour amener la région 3a à la transition de phase souhaitée.

Le matériau dans ladite région 3a se retrouve alors dans la même phase, une phase cristallisée dans le cas d'un matériau à transition de phase, que la seconde couche 4 tandis que la partie non exposée au rayonnement optique 6 de la première couche 3 reste dans la phase initiale du matériau, c'est-à-dire la phase amorphe dans le cas d'un matériau à transition de phase.

La partie non exposée de la première couche 3 présente une aptitude à la gravure inférieure à celle de la région 3a exposée. Préférentiellement, l'état physique du matériau constituant la partie non exposée de la première couche 3 est insensible à la gravure utilisée pour éliminer la région 3a. Ainsi, comme représentée sur la figure 3, la région 3a est gravée sélectivement, par exemple par gravure chimique, depuis la face libre 3b de la première couche 3 tandis que la partie non exposée de ladite couche 3 est conservée.

L'élimination de la région 3a libère la face libre 4a d'une région 4b de la seconde couche 4. Ladite région 4b correspond, dans la seconde couche 4, à la partie initialement recouverte par la région 3a de la première couche 3. Elle est représentée, sur la figure 3, par la zone de la seconde couche 4 disposée entre les deux traits en pointillés.

Comme représenté sur la figure 4, l'étape de gravure sélective se poursuit à travers la première couche 3 jusqu'à l'élimination de la région 4b et la libération de la partie de la surface libre du substrat 5 initialement recouverte par la région 4b. La première couche 3 sert, pendant la gravure sélective de la région 4b, de couche barrière à la gravure ou de masque de gravure. Elle n'autorise donc que la gravure de la région 4b initialement disposée sous la région 3b, le reste de la seconde couche 4, recouvert par la partie non exposée de la première couche 3 étant préservé. L'élimination de la région 4b peut être totale ou partielle, selon la profondeur désirée pour la zone en creux à former. De plus, dans le cas d'un matériau à transition de phase, le matériau en phase cristalline présente généralement une structure colonnaire, permettant de poursuivre la gravure à flanc droit à partir de la face libre 4a. De ce fait, les parois latérales qui délimitent l'espace libéré par la gravure de la région 4b prolongent de manière continue les parois latérales délimitant l'espace libéré par la gravure de la région 3a. Ainsi, lesdits deux espaces libérés ont une section latérale identique.

L'espace libéré par les régions 3a et 4b forme alors une zone en creux 1. Avantageusement, la profondeur de la zone en creux 1 correspond à la somme des épaisseurs des première et seconde couches 3 et 4 lorsque l'état physique initial de la première couche 3 est insensible à la gravure. Un tel procédé permet avantageusement d'augmenter la profondeur des zones en creux par rapport aux procédés selon l'art antérieur tout en étant facile à mettre en oeuvre. En effet, comme précédemment décrit, la profondeur des zones en creux formées dans une couche en matériau sensible à la chaleur, tel qu'un matériau à transition de phase, est limitée par la profondeur réduite de pénétration de l'onde thermique provoquée par le rayonnement optique. Or, selon l'invention, il est possible d'augmenter la profondeur des zones en creux tout en conservant une faible section d'exposition, en ajoutant une couche intermédiaire entre le substrat et la couche initiale en matériau sensible à la chaleur, capable d'être gravée dans le prolongement de la couche initiale. Par ailleurs, la couche intermédiaire selon l'invention présente l'avantage de rendre le procédé de formation des zones en creux plus facile à mettre en oeuvre et plus économique que celui décrit dans la demande de brevet WO-A-2005/101398. En effet, avec le procédé selon l'invention, la couche intermédiaire utilisée, c'est-à-dire la seconde couche 4, remédie aux inconvénients de la couche en résine photosensible décrite dans la demande de brevet WO-A-2005/101398. Le fait d'utiliser une couche intermédiaire dans le même matériau que celui utilisé pour la couche initiale, facilite, en effet, la formation de l'empilement 2, sans en altérer les propriétés.

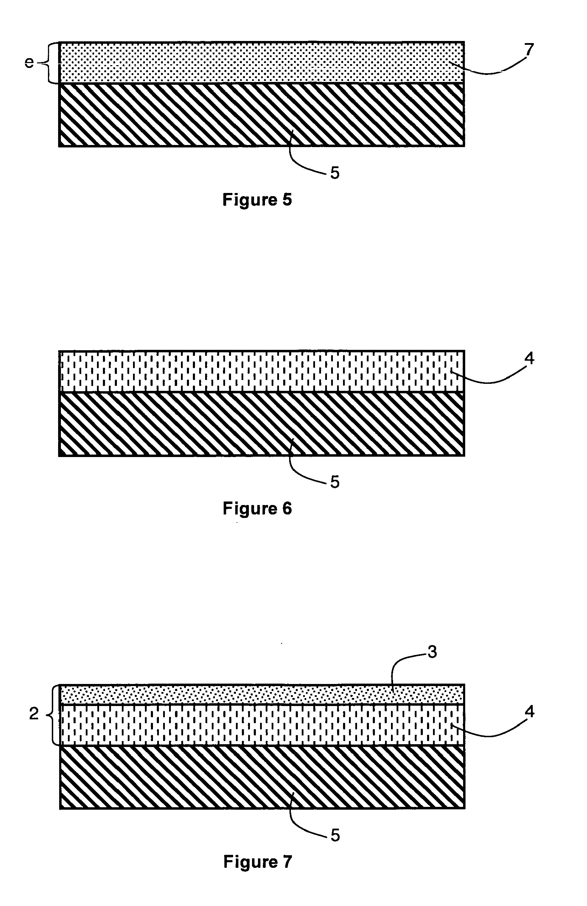

L'empilement 2 tel que représenté sur la figure 1 est effectivement facile à réaliser. À titre d'exemple, comme représenté sur les figures 5 à 7, l'empilement 2 peut être réalisé en formant préalablement, sur le substrat 5, la seconde couche 4 puis en déposant la première couche 3. La seconde couche 4 est formée par dépôt, sur le substrat 5, d'une couche préliminaire 7 ayant une épaisseur e prédéterminée, correspondant à celle souhaitée pour la seconde couche 4. La couche préliminaire 7 est formée en déposant le matériau destiné à former les première et seconde couches 3 et 4, dans l'état physique correspondant à l'état physique souhaité pour la première couche 3. Ainsi, pour un matériau à transition de phase, la couche préliminaire 7 est, par exemple, déposée sous forme amorphe. La couche préliminaire 7 est, ensuite traitée pour obtenir un changement de phase. Plus particulièrement, la totalité de la couche préliminaire 7 peut être soumise à un échauffement, par exemple par traitement thermique contrôlé, pour obtenir le changement de phase, par exemple la cristallisation dans le cas d'un matériau à transition de phase. Un nouveau dépôt dudit matériau sous forme amorphe est, alors, réalisé pour former la première couche 3.

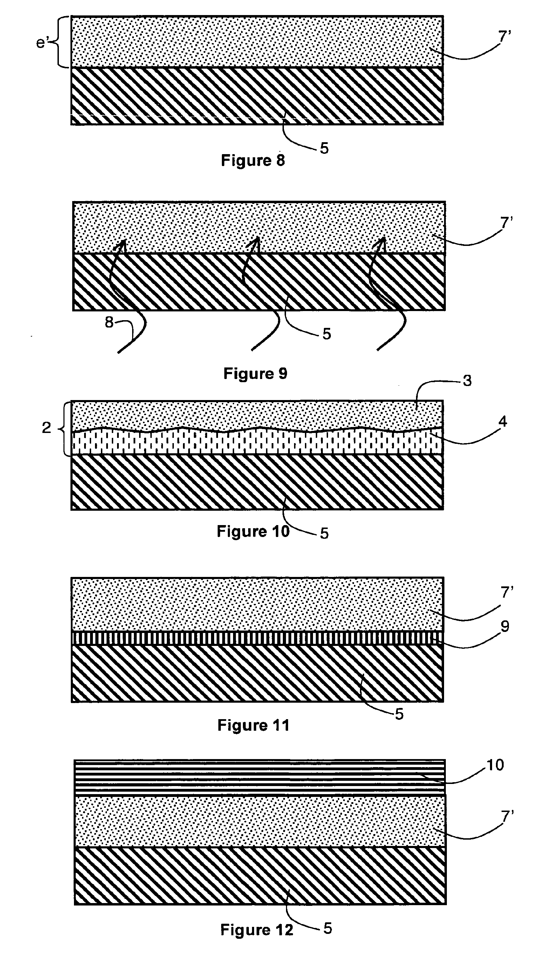

Dans une variante de réalisation représentée sur les figures 8 à 10, la seconde couche 4 et la première couche 3 ne sont pas formées sur le substrat 5 par dépôt successif de deux couches, mais à partir d'un dépôt unique d'une couche préliminaire 7'. Comme la couche préliminaire 7 représentée sur la figure 5, la couche préliminaire 7' est, dans ce cas, constituée par le matériau destiné à former les première et seconde couches 3 et 4. Le matériau formant ladite couche préliminaire 7' est, également, déposé dans l'état physique souhaité pour la première couche 3. Son épaisseur e' est, cependant, supérieure à l'épaisseur e de la couche préliminaire 7 représentée sur la figure 5. Cette épaisseur e' correspond avantageusement à la somme des épaisseurs souhaitées pour les première et seconde couches 3 et 4. Un traitement contrôlé est réalisé depuis la face libre du substrat 5 pour faire passer une partie de la couche préliminaire 7' dans le second état physique souhaité pour la seconde couche 4. Le traitement est appliqué à la totalité de la surface de la couche préliminaire 7', de sorte que la partie traitée de la couche préliminaire 7' constitue la seconde couche 4, le reste de la couche préliminaire 7' constituant la première couche 3.

Pour un matériau à transition de phase, le traitement contrôlé est, avantageusement, un traitement thermique permettant à une partie de la couche préliminaire 7' de passer d'un état amorphe à un état cristallin. Le traitement thermique est, par exemple, réalisé en appliquant à la couche préliminaire 7' un gradient de température décroissant depuis l'interface entre la couche préliminaire 7' et le substrat 5 jusqu'à la face libre de la couche préliminaire 7'. Ledit traitement thermique, par exemple réalisé par application d'un rayonnement optique 8, permet de cristalliser le matériau sur une profondeur donnée correspondant à l'épaisseur de la seconde couche 4. Dans un tel cas, l'épaisseur de la seconde couche 4 n'est pas limitée par l'application du rayonnement optique 8. Celui étant, en effet, appliqué sur la totalité de la face libre du substrat, il n'y a pas de limitation en pénétration thermique due à une exigence de section réduite de la région à exposer. Dans ce cas, le substrat est, bien entendu, transparent audit rayonnement optique 8.

A titre d'exemple, un empilement 2 comportant une première couche 3 d'une épaisseur de 30 nm et d'une seconde couche 4 d'une épaisseur de 50 nm a été réalisé selon ce mode de réalisation à partir d'une couche préliminaire 7', par exemple en Ge₂Sb₂Te₅ amorphe et d'une épaisseur de 80nm. La cristallisation de la seconde couche 4 est obtenue en chauffant la couche préliminaire 7', à travers le substrat 5, à 200°C, sous atmosphère inerte. L'échauffement est réalisé par insolation à l'aide d'un faisceau laser focalisé à la longueur d'onde 405 nm, avec une ouverture numérique de 0,9 et une puissance de 2 mW. Le faisceau est déplacé sur le substrat 5 avec une vitesse linéaire proche de 1 m/s. Une étape de gravure est ensuite réalisée pour former des zones en creux profondes dans un bain de NaOH à température ambiante.

Comme représenté sur la figure 11, une couche intermédiaire 9 peut être déposée avant le dépôt de la couche préliminaire 7', pour favoriser le changement d'état du matériau constituant la couche préliminaire 7'. Dans le cas d'un matériau à transition de phase, la couche intermédiaire 9 sert, par exemple, d'amorce à la germination des cristaux. La couche intermédiaire 9 peut, par exemple, être obtenue par dépôt de nitrure de germanium (GeN). Elle peut également être employée dans le mode de réalisation représenté sur la figure 5, avant le dépôt de la couche préliminaire 7.

Enfin, une couche supérieure 10 peut être déposée sur la couche préliminaire 7', avant la réalisation du traitement contrôlé destiné à former la seconde couche 4. Son rôle est de maintenir la partie supérieure de la couche préliminaire 7' à une température donnée lors de l'étape de traitement contrôlé et, par exemple, de favoriser l'application du gradient thermique entre les deux faces opposées de ladite couche 7'. La couche supérieure 10 est, alors formée d'un matériau qui est rapporté sur l'empilement 2.

Un tel procédé peut être plus particulièrement utilisé lors de la fabrication de supports d'enregistrements optique, tels que les disques « Blu-Ray » et notamment pour la fabrication de modèles originaux.

Il peut également être utilisé dans d'autres domaines nécessitant la formation de zones profondes et plus particulièrement dans des procédés de lithographie. Par exemple, il peut être employé lors de la fabrication de microstructures électro-mécanique (MEMS) ou dans le domaine de la microfluidique pour les applications de biologie ou de chimie.

L'invention n'est pas limitée aux modes de réalisation décrits ci-dessus. Plus particulièrement, le matériau applicable au domaine de l'invention n'est pas nécessairement un matériau à changement de phase. Il peut être de tout type dès lors qu'il est apte à changer d'état physique. À titre d'exemple, le matériau peut être un oxyde sous stoechiométrique, tel qu'un oxyde de molybdène MoOₓ. Un tel matériau ne change pas de phase, mais peut se transformer, par traitement thermique, en MoO₂/Mo, c'est-à-dire des agrégats de MoO₂ avec des résidus de molybdène (Mo). Ainsi, des zones en creux peuvent être formées dans un empilement comportant une première couche en MoOₓ et une seconde couche comprenant MoO₂/Mo. La seconde couche est, par exemple, obtenue en chauffant une couche en MoOₓ. Puis, un chauffage localisé de la première couche en MoOₓ permet d'obtenir au moins une région en MoO₂/Mo. Une gravure sélective est, ensuite réalisée, par exemple par HN03, pour éliminer le molybdène ainsi que les agrégats de MoO₂ avoisinants. La région en MoO₂/Mo de la première couche ainsi que la région de la seconde couche disposée en dessous de ladite région en MoO₂/Mo de la première couche sont éliminées pour former une zone en creux. D'autres matériaux peuvent également être envisagés tels que Ptₓ, MnOₓ.

## Revendications

1. Procédé de formation d'au moins une zone en creux (1) comportant les étapes successives suivantes :
- traitement localisé d'au moins une région (3a) d'une première couche (3) constituée par un matériau apte à changer d'état physique, pour faire passer ladite région (3a) d'un premier état physique à un second état physique,
- et gravure sélective de ladite région (3) depuis une face libre de ladite première couche (3),
**caractérisé en ce qu'**il comporte, avant l'étape de traitement localisé, une étape de formation d'un empilement (2) constitué par la première couche et une seconde couche (4) constituée par ledit matériau dans son second état physique, l'étape de gravure sélective étant poursuivie jusqu'à élimination de la région (4b) de la seconde couche (4) initialement recouverte par la région traitée (3a) de la première couche (3).

2. Procédé selon la revendication 1, **caractérisé en ce que** l'empilement (2) est réalisé en formant, sur un substrat (5), la seconde couche (4), puis en déposant la première couche (3).

3. Procédé selon la revendication 2, **caractérisé en ce que** la seconde couche (4) est formée par dépôt, sur le substrat (5), dudit matériau dans son premier état physique, puis par traitement dudit matériau pour le faire passer dans son second état physique.

4. Procédé selon la revendication 1, **caractérisé en ce que** l'empilement (2) est formé par dépôt, sur un substrat (5) d'une couche préliminaire (7') constituée par ledit matériau dans son premier état physique, puis par traitement contrôlé, depuis la face libre du substrat (5), pour faire passer une partie de la couche préliminaire (7') constituant la seconde couche (4), dans le second état physique.

5. Procédé selon l'une quelconque des revendications 2 à 4, **caractérisé en ce qu'**une couche intermédiaire (9) favorisant le changement d'état du matériau est déposée sur le substrat (5) avant la formation de l'empilement.

6. Procédé selon l'une quelconque des revendications 1 à 5, **caractérisé en ce que** ledit matériau est un matériau apte à passer d'un état thermodynamique métastable à un état thermodynamique stable, sous l'action de la chaleur.

7. Procédé selon la revendication 6, **caractérisé en ce que** ledit matériau est un matériau à transition de phase.

8. Procédé selon la revendication 7, **caractérisé en ce que** le matériau à transition de phase est un alliage d'au moins deux éléments choisis parmi le groupe comportant le germanium, l'antimoine, le tellure, l'indium, le sélénium, le bismuth, l'argent, le gallium, l'étain, le plomb et l'arsenic.

9. Utilisation d'un procédé selon l'une quelconque des revendications 1 à 8 lors de la fabrication d'un support d'enregistrement optique.
